# EUROPEAN PATENT APPLICATION

(11) **EP 2 096 441 A2**
(43) Date of publication of application: **02.09.2009**
(21) Application number: 09001960.5
(22) Date of filing: 12.02.2009
(51) Int. Cl.: G01N 35/00

(54) **Automatic analyzer**

(30) Priority: 28.02.2008 JP 2008047024
(71) Applicant: Hitachi High-Technologies Corporation, Tokyo (JP)
(72) Inventor: Iijima, Masahiko, Hitachinaka-shi Ibaraki, 312-8504 (JP); Kusano, Kazumi, Hitachinaka-shi Ibaraki, 312-8504 (JP); Azuma, Shinji, Hitachinaka-shi Ibaraki, 312-8504 (JP)
(74) Representative: Kirschner, Klaus Dieter

(57) **Abstract**

Disclosed herein is an automatic analyzer that can eliminate the generation of air bubbles of dissolved gas in a liquid circulating in a thermostat bath enabling stable photometry. A degasifier for removing the dissolved gas in the liquid and a bypass passage for ensuring a flow rate required for temperature control of the circulating liquid are provided in a passage for temperature-controlled liquid circulating in the thermostat bath. The automatic analyzer can reduce the dissolved gas concentration to a level at which air bubbles of the dissolved gas in the liquid do not appear while maintaining a flow rate required for temperature control of the liquid circulating in the thermostat bath, thus eliminating air bubbles passing through the light flux during photometry and accordingly enabling stable photometry.

## Description

The present invention relates to an automatic analyzer that analyzes Components of biological samples such as blood and urine. More particularly, the invention relates to an automatic analyzer having a thermostat bath that stores a liquid for maintaining a reaction vessel at a constant temperature.

An automatic analyzer mixes a sample and a reagent in a reaction vessel and measures optical characteristics of a reaction liquid to perform qualitative and quantitative analyses of a target component. Such an automatic analyzer needs to have stable photometry capabilities. In particular, with an analyzer that enables analysis with reduced consumption of a sample and a reagent and a small amount of reaction liquid, it is necessary to reduce the size of a reaction vessel. Further, for this type of automatic analyzer the area of the reaction liquid to be subjected to photometry is also reduced and accordingly it has been necessary to thin the flux of light from a light source used for photometry. Photometry performed by these analyzers may be affected even by air bubbles having a smaller size in comparison with conventional cases.

JP-A-2005-181087 discloses an automatic analyzer having an air trap for removing air bubbles in a passage for circulating the water in a thermostat bath. This air trap is adapted to remove air bubbles by using the difference in specific gravity between the water and the air bubbles.

It is common to remove dissolved oxygen, etc. from water to be used in a thermostat bath through a vacuum deaerator before the water is supplied to the thermostat bath. In this case, however, the water comes in contact with the atmosphere during circulation and therefore oxygen or the like in the atmosphere dissolves into the water. A liquid circulating in the thermostat bath is heated by a heater to maintain constant reaction temperature (for example, 37°C). In some previous cases, therefore,' dissolved gas in the liquid appeared as small air bubbles (micro-bubbles) having a diameter of 0.1 mm or less.

The technique described in JP-A-2005-181087 is a method for removing air bubbles having such a size that they come up to the liquid surface under the difference in specific gravity. However, it is known that the surfacing speed of the micro-bubbles extremely decreases with decreasing diameter of air bubbles. Therefore, in a passage in which the liquid in the thermostat bath is circulated by a pump, micro-bubbles existed that cannot be easily removed by the above-described air trap due to the size of the micro-bubbles. When the air trap for removing air bubbles by the specific gravity difference is used, it is necessary to satisfy two conflicting conditions. Specifically, it is necessary to decrease the flow rate as low as possible in order to improve the effects of. surfacing and eliminating air bubbles and, in contrast, maintain a specified flow rate or more in order to maintain constant temperature of the liquid in the thermostat bath. Further, it has been necessary to periodically discharge from the air trap the gas collected at the upper portion of the air trap under the specific gravity difference. In many cases, a surfactant or the like is generally added to the liquid circulating in the thermostat bath in order to prevent breeding of germs. In such a case, however, the concentration of the surfactant in the liquid may decrease and the effects of preventing the breeding of germs may deteriorate since some liquid in the thermostat bath is discharged when the gas collected at the upper portion of the air trap is discharged.

An object of the present invention is to provide an automatic analyzer in which a vacuum degasifier removes dissolved gas not only during water supply to the thermostat bath but also during circulation to reduce the generation of micro-bubbles, thus enabling stable photometry.

In order to attain the above-mentioned object, the present invention is configured as follows.

The present invention provides an automatic analyzer comprising: a reaction vessel for mixing a sample and a reagent; a thermostat bath for storing a liquid into which the reaction vessel is *immersed;* a discharge pipe for discharging the liquid from the thermostat bath; a supply pipe for supplying a liquid to the thermostat bath; a pump disposed between the discharge pipe and the supply pipe to circulate the liquid in the pipes; and a degasifier for removing dissolved gas from the liquid circulating in the pipes.

The concentration of dissolved gas (for example, amount of dissolved oxygen) in the liquid circulating in the thermostat bath, required to eliminate the generation of micro-bubbles and attain stable photometry, depends on the type of liquid circulating in the thermostat bath, temperature controlled to a homeothermal state, and other conditions, and is inherent to each analyzer. Therefore, the automatic analyzer may include a degasifier that can constantly attain the dissolved gas concentration level specifically required for each analyzer. Further, the automatic analyzer may be designed to supervise the deaeration state of the liquid in the thermostat bath though monitoring of the dissolved gas concentration level.

The dissolved gas concentration of the liquid is reduced by the degasifier for a time. However, since the liquid surface is in contact with air in the thermostat bath, gas redissolution from the surface into the inside of the liquid in the thermostat bath progresses. Therefore, preferably, the deaeration capabilities of the liquid by the degasifier may exceed the rate of gas redissolution from the surface into the inside of the liquid in the thermostat bath.

Generally, a vacuum degasifier includes an infinite number of thin pipes having a small diameter to increase the surface area of the liquid thus improving the deaeration efficiency by a vacuum pump. Therefore, when the degasifier is directly connected between the discharge pipe and the supply pipe having a pump for circulating the liquid in the thermostat bath, the flow rate of the circulating the liquid is likely to be reduced. Therefore, preferably, a bypass passage for maintaining the flow rate in parallel with the pipe passing through the degasifier may be separately disposed between the discharge pipe having the degasifier and the supply pipe. For such a configuration, it is preferable to control the flow rate of the liquid to each passage so that the deaeration capabilities of liquid by the degasifier may exceed the rate of gas redissolution from the surface into the inside of the liquid in the thermostat bath.

The automatic analyzer of the present invention can reduce the concentration of dissolved gas in the liquid circulating in the thermostat bath while maintaining a passage flow rate required to maintain constant temperature of the liquid circulating in the thermostat bath, thus eliminating the generation of micro-bubbles itself and accordingly enabling stable photometry.

Other objects and advantages of the invention will become apparent from the following description of embodiments with reference to the accompanying drawings in which:
Fig. 1 is a block diagram showing an embodiment of an automatic analyzer which applies a degasifier according to the present invention.
Figs. 2A and 2B show graphs of a difference between a normal reaction process and a reaction process affected by micro-bubbles in a liquid circulating in a thermostat bath.
Fig. 3 is a graph showing a relation between the dissolved oxygen concentration in the liquid circulating in the thermostat bath and averages of reaction process fluctuation ranges in single wavelength photometry.
Fig. 4 is a block diagram showing an embodiment of an automatic analyzer which applies a bypass passage disposed in parallel with the degasifier according to the present invention.

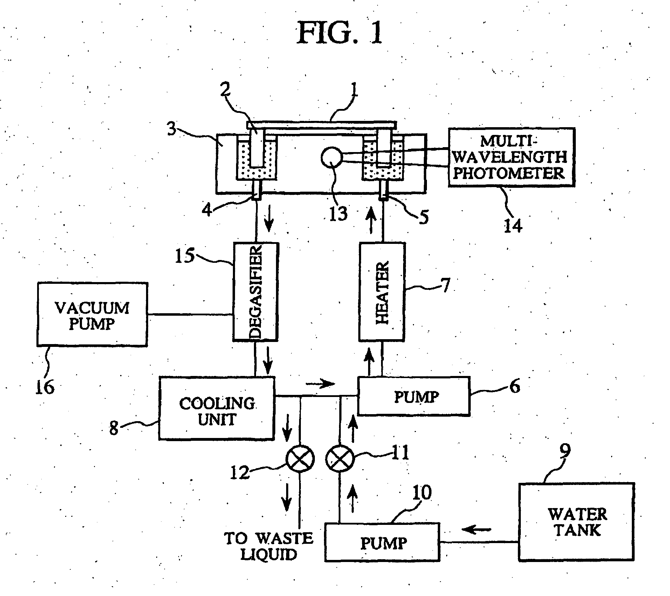

Fig. 1 is a block diagram showing an embodiment of a hot-water circulating incubator bath of an automatic analyzer according to the present invention. A reaction vessel 2 attached on the circumference of a circular reaction disk 1 is immersed into the liquid held by a circular thermostat bath 3. The liquid in the thermostat bath 3 is constantly circulated by a pump 6 disposed between a discharge pipe 4 and a supply pipe 5. The temperature of the liquid is controlled through ON/OFF control by a heater 7 to maintain the reaction liquid held in the reaction vessel 2 at temperature suitable for reaction (for example, 37°C). The liquid in the thermostat bath may be water or any other solution. Further, a cooling unit 8 may be provided for cooling the liquid if the liquid temperature in the thermostat bath rises too much. Liquid supply from a water tank 9 to a hot-water circulation passage is controlled by a feed pump 10 and a feed electromagnetic valve 11. The hot-water circulation passage is also provided with a discharge electromagnetic valve 12 to discharge liquid out of the passage when the liquid circulating in the thermostat bath is changed.

When a light flux emitted from a light source lamp 13 passes through the reaction liquid (a mixture of a sample and a reagent) held in the reaction vessel 2, the light that has penetrated the reaction liquid is measured by a multi-wavelength photometer 14 to perform qualitative and quantitative analysis of a specific component in the sample.

The liquid supplied to the thermostat bath 3 and the liquid circulated therethrough are opened to air, respectively, in the water tank 9 and at the surface of the thermostat bath 3 into which the reaction vessel 2 is immersed. Therefore, these liquids are normally circulating in the thermostat bath in a state that dissolved gas is present therein. Dissolved gas in the liquids may appear as minute air bubbles (micro-bubbles) due to various factors such as temperature rise and pressure fluctuations by a pump. Such micro-bubbles may cause diffuse reflection of the light from the light source lamp, resulting in the deterioration of the photometry accuracy.

In order to reduce such noise effects of a deterioration in photometry accuracy, a typical automatic analyzer performs simultaneously measures the absorbance of a main wavelength and a sub wavelength as a base line to use the absorbance difference between the two wavelengths for concentration calculation. The main wavelength is a wavelength at which an indicator substance reveals absorbance fluctuations in response to the concentration of the components under measurement. The sub wavelength is a wavelength that is not affected by absorbance fluctuations of the indicator substance responsive to the concentration of the components under measurement. However, in the case of a reagent for some items, for example, a reagent for the immunonephelometry using antigen-antibody reaction or the latex turbidimetry, the absorbance difference between the main and sub wavelengths is small in a region at which concentration of the components under measurement is low. In some cases, therefore, it is preferable to use the absorbance with a single wavelength as it is for calculation of the concentration in order to improve the measurement sensitivity. In such a case, however, deterioration in the photometry accuracy caused by particularly micro-bubbles will largely affect measurements.

The present invention is configured such that a degasifier 15 is provided on a passage for circulating the liquid in the thermostat bath and then the dissolved gas in the liquid in the degasifier is degasified by using a vacuum pump 16 to remove the source itself from which micro-bubbles would otherwise be produced.
Even if the liquid is degasified by the degasifier, gas redissolution from the surface into the inside of the liquid in the thermostat bath progresses unless the liquid is continuously degasified. Therefore, according to the present invention, a degasifier is provided in the circulation passage for performing temperature control of the liquid in the thermostat bath, thus enabling continuous deaeration.

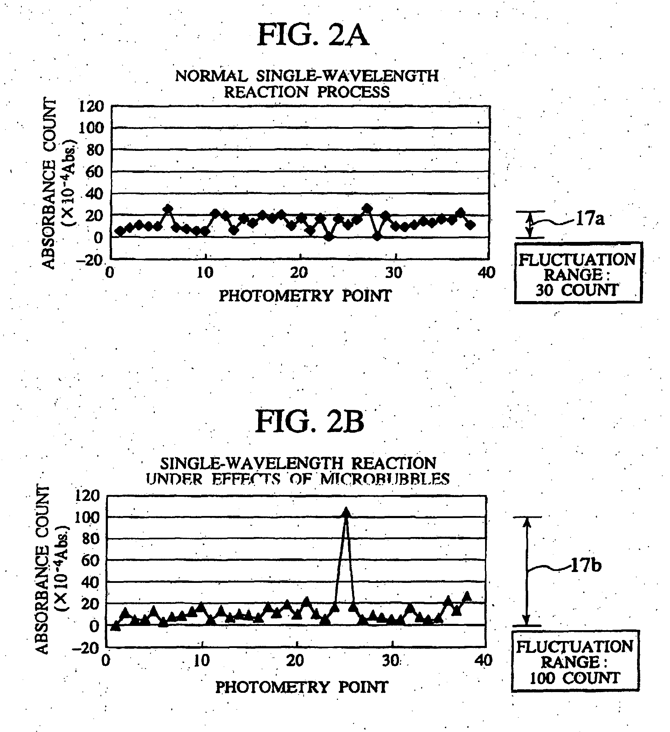

Figs. 2A and 28 show a difference between a normal reaction process and a reaction process affected by micro-bubbles in photometry. The graph in Fig. 2A shows a normal reaction process and the graph in Fig. 28 a reaction process affected by micro-bubbles. The horizontal axis in each graph shows photometry points indicating the course of reaction, and the vertical axis the absorbance count. In Fig. 28, an absorbance change is perceived at a photometry timing of the 25th point, which will be regarded to be caused by the passage of micro-bubbles.

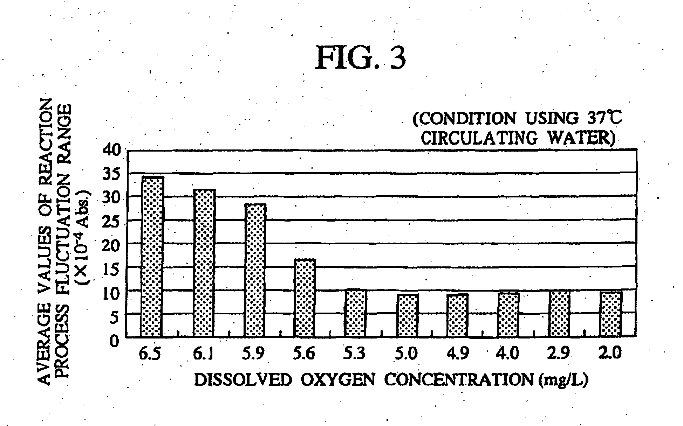

Fig. 3 is a graph showing results obtained by comparing a relation between the dissolved oxygen concentration in the liquid circulating in the thermostat bath and the photometry stability using averages of reaction process fluctuation ranges in single wavelength photometry as indicator. The graph data shown in Fig. 3 is obtained under a condition where 37°C surfactant solution is used as a liquid circulating in the thermostat bath.

The graph of Fig. 3 plots averages obtained by repetitively measuring 100 times reaction process fluctuation ranges (ranges shown by 17a and 17b of Figs. 2A and 28) indicating absorbance fluctuations of water with respect to a single dissolved oxygen concentration. With a dissolved oxygen concentration of less than 5.3 mg/L, the reaction process fluctuation range is reduced 1/3 times that in a case without deaeration (with a saturated-dissolved oxygen concentration of 6.86 mg/L in 37°C pure water). Since the reaction process fluctuation range is not further improved at a dissolved oxygen concentration lower than 5.3 mg/L, it turns out that the concentration of 5.3 mg/L is a threshold value required for stable photometry.

As mentioned above, the threshold value of the dissolved gas concentration required for stable photometry is obtained for each analyzer. The automatic analyzer may include a degasifier that meets the thus-obtained relevant condition. Also, the automatic analyzer may include a sensor for measuring the concentration of dissolved gas in the liquid circulating in the thermostat bath such that an alarm is generated if the dissolved gas concentration exceeds a threshold value inherent to the analyzer.

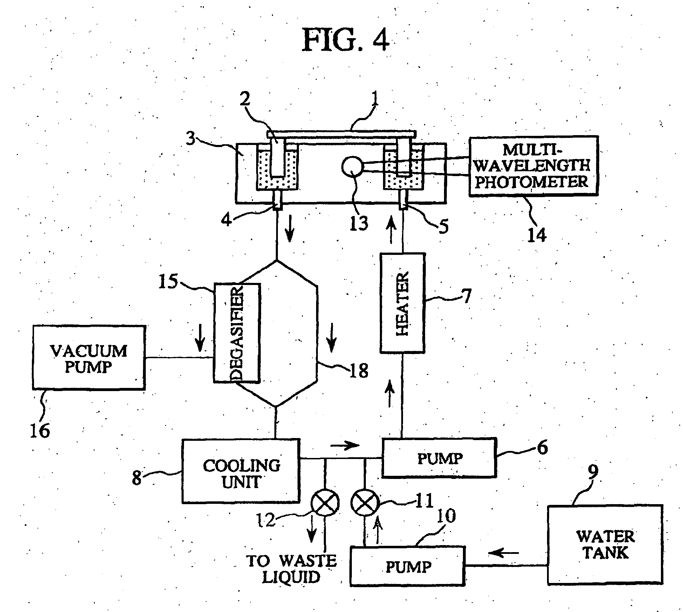

Fig. 4 is a block diagram showing an embodiment of an automatic analyzer which applies a bypass passage in parallel with the degasifier passage according to the present invention. Generally, if a vacuum degasifier is used on a passage, the passage resistance increases and the flow rate of the entire passage decreases in many eases. Therefore, the present embodiment is provided with a bypass passage 18 in parallel with the degasifier passage in addition to the degasifier passage on the circulating passage in order to maintain the minimum flow rate necessary to perform temperature control of the liquid in the thermostat bath. More preferably, the ratio of the flow rate of the degasifier passage to the flow rate of the bypass passage is such that both the flow rate of the entire circulation passage required for liquid temperature control and the deaeration capabilities of the liquid are satisfied.
In a configuration having a sensor for measuring the concentration of dissolved gas in the liquid circulating in the thermostat bath, the automatic analyzer include a regulation valve for controlling the amounts of liquid flowing in the degasifier passage and the bypass passage such that the flow rate of the liquid for the degasifier passage is adjusted in response to measurements provided by the sensor.

While the invention has been described in its preferred embodiments, it is to be understood that the words which have been used are words of description rather than limitation and that changes within the purview of the appended claims may be made without departing from the true scope of the invention in its broader aspects.

## Claims

1. An automatic analyzer comprising:
a reaction vessel for mixing a sample and a reagent; a thermostat bath for storing a liquid into which the reaction vessel is immersed;
a discharge pipe for discharging the liquid from the thermostat bath;
a supply pipe for supplying a liquid to the thermostat bath;
a pump disposed between the discharge pipe and the supply pipe to circulate the liquid in the pipes; and
a degasifier for removing dissolved gas from the liquid circulating in the pipe.

2. The automatic analyzer according to Claim 1, wherein:
the automatic analyzer includes a sensor for measuring the concentration of dissolved gas in the liquid circulating in the supply pipe.

3. The automatic analyzer according to Claim 2, wherein:
the automatic analyzer includes means adapted to generate an alarm if measurements of the dissolved gas concentration provided by the sensor is not within a specified concentration range.

4. The automatic analyzer according to Claim 2, wherein:
the automatic analyzer includes a passage bypassing the degasifier between the discharge pipe and the supply pipe.

5. The automatic analyzer according to Claim 4, wherein the automatic analyzer includes a mechanism that controls the flow rate for at least one of the degasifier passage and the bypass passage; and
wherein the automatic analyzer includes means for controlling the passage flow rate in response to measurements provided by the sensor.
